# EUROPÄISCHE PATENTSCHRIFT

(11) **EP 0 741 062 B1**
(45) Veröffentlichungstag und Bekanntmachung des Hinweises auf die Patenterteilung: **05.07.2000**
(21) Anmeldenummer: 96106758.4
(22) Anmeldetag: 29.04.1996
(51) Int. Cl.: B60R 21/20

(54) **Airbag-Abdeckung sowie Verfahren zu seiner Herstellung**
Airbag cover and method for its production
Recouvrement pour coussin gonflable et son procédé de fabrication

(30) Priorität: 03.05.1995 DE 19516230
(43) Veröffentlichungstag der Anmeldung: 06.11.1996
(73) Patentinhaber: ELDRA KUNSTSTOFFTECHNIK GMBH, D-84137 Vilsbiburg (DE)
(72) Erfinder: Friedberger, Roland, 84155 Binabiburg (DE)
(74) Vertreter: Kohlmann, Karl Friedrich, Dipl.-Ing.

(56) Entgegenhaltungen:
- EP-A- 0 487 753
- EP-A- 0 495 188
- EP-A- 0 586 222
- EP-A- 0 685 365
- DE-C- 3 904 977
- GB-A- 2 287 226
- US-A- 4 120 516
- US-A- 5 316 822
- US-A- 5 421 608
- US-A- 5 447 328
- PATENT ABSTRACTS OF JAPAN vol. 94, no. 011 & JP-A-06 305390 (TOYODA GOSEI CO LTD), 1.November 1994,
- PATENT ABSTRACTS OF JAPAN vol. 94, no. 010 & JP-A-06 285876 (INOAC CORP), 11.Oktober 1994,
- PATENT ABSTRACTS OF JAPAN vol. 14, no. 305 (M-0992), 29.Juni 1990 & JP-A-02 099324 (TOYOTA MOTOR CORP.), 11.April 1990,
- PATENT ABSTRACTS OF JAPAN vol. 014, no. 432 (M-1026), 17.September 1990 & JP-A-02 171362 (TAKATA KK), 3.Juli 1990,
- PATENT ABSTRACTS OF JAPAN vol. 18, no. 83 (M-1558), 10.Februar 1994 & JP-A-05 294196 (NIPPON PLAST CO LTD), 9.November 1993,
- PATENT ABSTRACTS OF JAPAN vol. 012, no. 459 (M-770), 2.Dezember 1988 & JP-A-63 184548 (TOYODA GOSEI CO LTD), 30.Juli 1988,
- PATENT ABSTRACTS OF JAPAN vol. 13, no. 369 (M-860), 16.August 1989 & JP-A-01 122754 (SEKISUI CHEM CO LTD), 16.Mai 1989,

## Beschreibung

Die Erfindung betrifft eine Airbag-Abdeckung, insbesondere für einen Airbag als Frontal- und Seitenaufprallschutz in einem Kraftfahrzeug, mit einem die Airbag-Betriebseinrichtungen sowie das Airbag-Aufprallpolster schützenden bzw. abdeckenden Formteil, das Sollbruchstellen aufweist, die bei Auslösung des Airbags durch das Aufprallpolster aufbrechbar sind und ein Austreten des Aufprallpolsters gewährleisten und mit einer auf dem Formteil aufgebrachten Sichtbedeckung. Des weiteren betrifft die Erfindung die Verwendung einer Airbag-Abdeckung, ein Verfahren zur Herstellung einer Sichtbedeckung für eine Airbag-Abdeckung und eine Schablone zur Herstellung einer Sichtbedeckung.

Zur Erhöhung der Sicherheit der Insassen in einem Kraftfahrzeug bei einem Verkehrsunfall sind verschiedene Airbag-Einrichtungen bereits hinlänglich bekannt. Zum Schutz eines Fahrers ist beispielsweise im Lenkrad eines Kraftfahrzeugs ein Airbag untergebracht. Um Verletzungen vorzubeugen, ist auf der Seite des Beifahrers ein Airbag im Armaturenbrett eingebaut. Des weiteren ist es bekannt, in den Türen Airbag-Einrichtungen als Seitenaufprallschutz einzubauen. All die bekannten Airbag-Einrichtungen sind durch Abdeckungen aus Kunststoff oder umschäumten Metallteilen, hier als Formteil bezeichnet, abgedeckt und können auf der Oberfläche der Abdeckung mit einer der Innenausstattung angepaßten Struktur versehen sein. Um die einwandfreie Funktion der Airbag-Einrichtungen zu gewährleisten, sind die Abdeckungen mit Sollbruchstellen versehen, die bei einer vorbestimmten Reißkraft reißen und ein einwandfreies Austreten des darunter befindlichen Airbags gewährleisten. Um ein gefälligeres und der gehobenen Innenausstattung angepaßtes Äußeres zu schaffen, können zudem auf dem die Abdeckungen bildenden Formteil Sichtbedeckungen aus echtem Leder, aus Austauschwerkstoffen für Leder oder Kunststoffolien aufgebracht sein. Für das einwandfreie Funktionieren der Airbag-Einrichtungen müssen jedoch diese Sichtbedeckungen Reißnähte aufweisen.

Gemäß dem Stand der Technik sind Sichtbedeckungen aus Leder auf dem Formteil aufkaschiert oder hinterschäumt. Die bekannten Lederbedeckungen bestehen aus mehrteiligen Abschnitten, die im Bereich der Sollbruchstellen des Formteils zusammengenäht sind. In Abhängigkeit von der Sollreißkraft wird die Stichlänge, die Stärke und das Material des Fadens gewählt, damit bei einer genau definierten Reißkraft die Naht reißt und das einwandfreie Austreten des Aufprallpolsters gewährleistet wird. Bei zusammengenähten Sichtbedeckungen muß die Naht genau über den Sollbruchstellen des Formteils positioniert werden, damit bei Auslösung des Airbags das Austreten des Aufprallpolsters durch Reißen der Naht einwandfrei erfolgen kann.

Das genaue Positionieren der zusammengenähten Lederbedeckung auf dem Formteil ist sehr schwierig und kann sich beim Aufkaschieren oder Hinterschäumen verziehen, was optisch nachteilig ist und möglicherweise zum Ausschuß des bereits mit großem Arbeitsaufwand hergestellten Teils führt. Des weiteren ist z.B. bei einer Pralltopf-Airbag-Abdeckung in einem Lenkrad eine sehr komplizierte Form der Reißnaht notwendig, die nur sehr arbeitsaufwendig und teuer herzustellen ist.

Die die Erfindung betreffenden Airbag-Abdeckungen mit einer auf einem Formteil aufgebrachten Sichtbedeckung unterliegen sehr strengen Prüfungsvorschriften. So muß jedes Teil auf seine einwandfreie Funktion geprüft werden. Aufgrunddessen verursacht eine nicht korrekt hergestellte Naht in einer Sichtbedeckung der genannten Art sehr hohe Kosten. Außerdem ist es zur Vermeidung von Verletzungen der Insassen in einem Kraftfahrzeug bei Auslösung einer Airbag-Einrichtung zwingend notwendig, daß keine Teile der Airbag-Abdeckung sich lösen dürfen. Dieses Erfordernis kann auch zur Unbrauchbarkeit einer Airbag-Abdeckung gemäß dem Stand der Technik führen.

Aus der EP 0 586 222 A2 ist eine Airbag-Abdeckung gemäß dem Oberbegriff des Anspruchs 1 bekannt. Die hieraus bekannte Airbag-Abdeckung weist eine Sichtbedeckung auf einem Formteil auf, in dem Sollbruchstellen vorhanden sind. In der Sichtbedeckung sind partielle Materialdickenreduzierungen im Bereich der Sollbruchstellen des Formteils gezeigt. Die partiellen Materialdickenreduzierung in der Abdeckung dieser bekannten Airbag-Abdeckung werden durch einen Pressvorgang erzielt. Es wird beim Spritzen des Formteils der Abdeckung ein Stempel mit Vorsprüngen gegen die Abdeckung in der Spritzgussform gedrückt. Eine derartige Herstellung der Materialdickenreduzierungen ist mit dem Nachteil behaftet, dass die erforderlichen geringen Toleranzen nur mit großem Aufwand einzuhalten sind. Darüber hinaus werden die Werkstoffeigenschaften bei der Herstellung verändert. So werden durch das Andrücken des Stempels Verdichtungen im Material der Sichtbedeckung erzeugt und dadurch möglicherweise auch die Funktionstüchtigkeit des Airbags an sich beeinträchtigt.

Das der Erfindung zugrundeliegende technische Problem besteht darin, eine Airbag-Abdeckung und eine Verfahrensweise zur Herstellung derselben zu schaffen, die eine einwandfreie Funktion des Airbags gewährleistet und kostengünstig herzustellen ist.

Dieses technische Problem wird bei einer gattungsgemäßen Airbag-Abdeckung, bei der die Sichtbedeckung partielle Materialdickenreduzierungen aufweist, die im Bereich der Sollbruchstellen des Formteils verlaufen, dadurch gelöst daß die Materialdickenreduzierungen durch Materialabtrag geschaffen sind.

Der Erfindung liegt der Gedanke zugrunde, die bei den bisherigen Sichtbedeckungen aus Leder, Lederaustauschwerkstoffen oder Kunststoffolien bestehenden Sichtbedeckungen notwendigen Nähte durch partielle Materialdickenreduzierungen, die durch Materialabtrag geschaffen sind, in der Sichtbedeckungsschicht zu ersetzen. Durch die partiellen Materialdickenreduzierungen ist es erstmals möglich, die Sichtbedeckungen über die im Formteil ausgebildeten Sollbruchstellen hinweg einteilig auszubilden, was zu einem gefälligeren Äußeren führt und insbesondere sehr kostengünstig herstellbar ist. Dabei wird jedoch die einwandfreie technische Funktion des Airbags bei der Auslösung in keinster Weise beeinträchtigt, da die Sichtbedeckung bei Auslösung des Airbags an den partiellen Materialdickenreduzierungen reißt. Durch die einteilige Ausbildung einer Sichtbedeckung bei einer erfindungsgemäßen Airbag-Abdeckung über den Bereich der Sollbruchstellen im Formteil hinweg, ist es gewährleistet, daß bei Auslösung des Airbags keinerlei Teilchen frei in den Innenraum gelangen können, welche bei den zu schützenden Insassen zu Verletzungen führen könnten.

Vorteilhafterweise besteht die Sichtbedeckung aus einer flexiblen Schicht. Dadurch ist ein Aufbringen der Sichtbedeckung auf einem beispielsweise eine gewölbte Oberfläche aufweisenden Formteil leicht und der Form der Oberfläche problemlos anpaßbar aufbringbar.

Insbesondere können flexible Schichten aus Leder, aus einem Lederaustauschmittel wie Kunstleder, Alcantara oder Lorica oder einer Kunststoffolie wie beispielsweise aus PUR, PVC, ASA, ABS bestehen. Die Auswahl der Sichtbedeckung ist erstmals aus den genannten Materialien möglich, ohne daß Reißnähte vorzusehen sind. Dadurch ist eine individuelle Anpassung an die Innenausstattung eines Kraftfahrzeugs auch bei Airbag-Abdeckungen möglich.

Aufgrund der Einbringung der partiellen Materialdickenreduzierungen auf der dem Formteil zugewandten Seite sind auf der Sichtseite der Sichtbedeckung keine die Optik beeinträchtigenden Linien oder dergleichen sichtbar. Hierdurch ist es jedoch auch problemlos möglich, die Sichtbedeckungen mit den auf der Hinterseite eingeformten partiellen Materialdickenreduzierungen in auf der Oberfläche des Formteils eingeformten Ziernuten einzupassen, um große Flächen in gewünschter Weise optisch zu unterteilen. Durch die auf der Hinterseite eingeformten Materialdickenreduzierungen läßt sich die einteilige Sichtbedeckung sehr einfach in die möglicherweise vorgesehenen Ziernuten auf einem Formteil eindrücken, ohne daß störende Verdickungen an der Oberfläche, d.h. eventuelle Aufwölbungen, sichtbar sind. Gleichzeitig bleibt jedoch auf den flächigen Abschnitten der Sichtbedeckung die charakteristische Haptik erhalten.

Indem die partiellen Materialdickenreduzierungen Nuten auf der Oberfläche der Sichtbedeckung bilden, ist zum einen die einwandfreie definierte Sollbruchstelle in der Sichtbedeckung gewährleistet und zum anderen keine derartige genaue Positionierung der partiellen Materialdickenreduzierungen gegenüberliegend den Sollbruchstellen im Formteil notwendig, wie beim Stand der Technik.

Das Formteil besteht vorteilhafterweise aus einem gespritzten Kunststoffteil, was sehr kostengünstig herzustellen ist. Es ist jedoch auch möglich, wie z.B. bei einem Beifahrer-Airbag, den Formteil aus einem oder mehreren Metallteilen herzustellen, die umschäumt sind.

Insbesondere ist es vorteilhaft, daß die Sichtbedeckung der genannten Art direkt hinterspritzt wird, wodurch das Formteil in einem Arbeitsgang mit einer Sichtbedeckung der genannten Art versehen werden kann. Hierdurch können wiederum Kosten bei der Herstellung eingespart werden.

Eine sehr einfache Möglichkeit zur Aufbringung einer Sichtbedeckung besteht in dem Aufkaschieren auf dem Formteil, d.h. einem Aufkleben.

Vorteilhafterweise beträgt die Dicke der Sichtbedeckung in den Bereichen der partiellen Dickenreduzierungen zumindest 1/10 mm, vorteilhafterweise 2/10 mm, je nach verwendetem Schichtmaterial. Dadurch ist ein einfaches Aufbringen und Angleichen der Sichtbedeckung an die Oberfläche des Formteils möglich, ohne daß die charakteristische bzw. gewünschte Haptik darunter leidet.

Eine Airbag-Abdeckung der oben beschriebenen Art kann in einem Lenkrad-Airbag, d.h. in einem Pralltopf, einem Beifahrer-Airbag, d.h. im Armaturenbrett, wie auch in einem Seitenaufprallschutz, eingebaut werden. Des weiteren sind derartige Airbag-Abdeckungen auch in Airbag-Einrichtungen, die in den Seitenholmen oder in Sitzen untergebracht sind, einsetzbar.

Zur Herstellung einer Sichtbedeckung der genannten Art wird bei einem erfindungsgemäßen Verfahren eine flexible Schicht auf eine Erhebungen aufweisende Schablone aufgelegt und das Schichtmaterial wird im Bereich der Erhebungen auf der der Schablone abgewandten Seite teilweise mittels einer Schneideinrichtung definiert abgetragen. Dadurch ist es in einem Arbeitsgang möglich, auch komplizierte Sollbruchstellen in dem flexiblen Schichtmaterial, die die Sichtbedeckung für eine Airbag-Abdeckung der genannten Art bildet, einzuformen.

Vorteilhafterweise wird ein derartiges Verfahren in einer an sich bekannten Spaltmaschine für Leder oder lederähnlichen Werkstoffe, die ein Bandmesser aufweist, durchgeführt.

Für die Durchführung des genannten Verfahrens ist es vorteilhaft, wenn die Schablone aus einem plattenförmigen Material besteht, deren Erhebung durch Abtragen von Material auf einer Seite der Platte herstellbar sind. Dadurch ist die Herstellung einer Schablone sehr kostengünstig. Des weiteren ist eine derartige Schablone auch problemlos im Spritzgußverfahren herstellbar.

Je nach der gewünschten Art der herzustellenden partiellen Materialdickenreduzierungen ist es vorteilhaft, daß die Erhebungen auf der Schablone senkrechte oder geneigte Flanken aufweisen.

Im folgenden sind zur weiteren Erläuterung und zum besseren Verständnis der Erfindung zwei Ausführungsbeispiele unter Bezugnahme auf die beigefügten Zeichnungen näher beschrieben und erläutert. Es zeigt:
- Fig. 1: eine Teilquerschnittsansicht einer erfindungsgemäßen Airbag-Abdeckung mit darauf aufkaschierter Sichtbedeckung aus Leder,
- Fig. 2: eine schematische Querschnittsansicht durch eine Bearbeitungsmaschine zur Herstellung einer Sichtbedeckung für eine erfindungsgemäße Airbag-Abdeckung,
- Fig. 3: eine Draufsicht auf eine erfindungsgemäße Schablone,
- Fig. 4: eine schematische Querschnittsansicht entlang der Linie A-A nach Fig. 3, und
- Fig. 5: eine Teilquerschnittansicht einer erfindungsgemäßen Airbag-Abdeckung, bei der die Sichtbedeckung hinterspritzt ist.

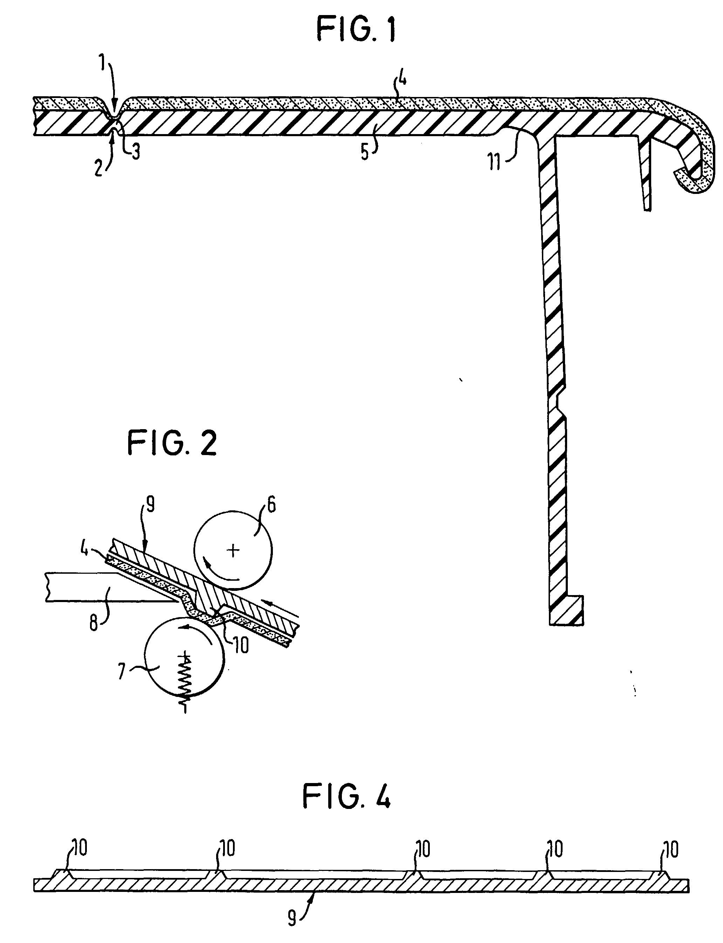

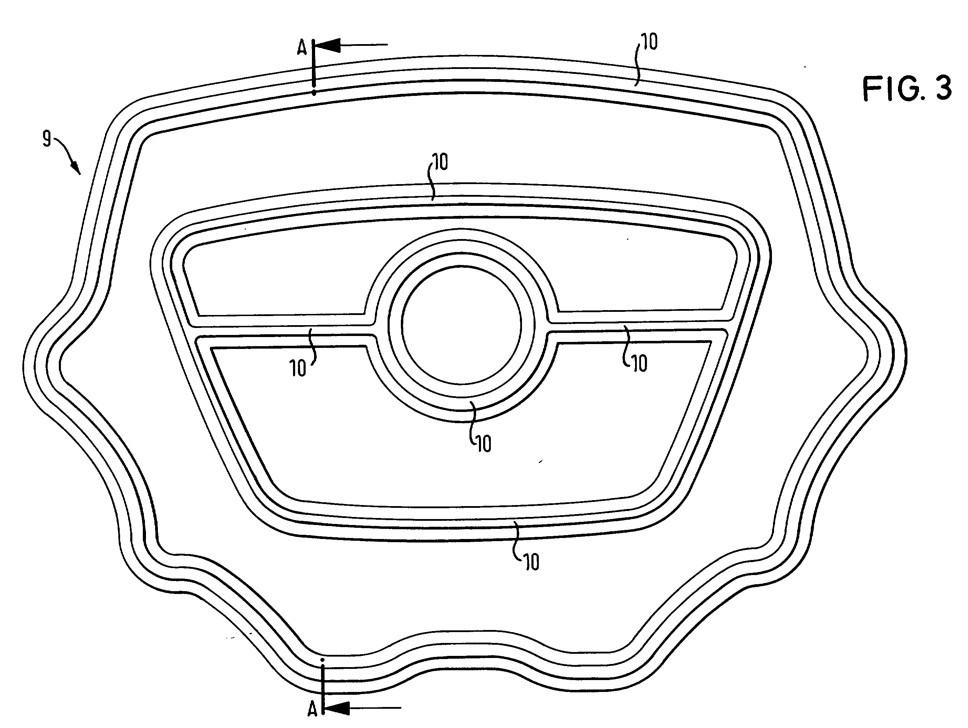

In der Fig. 1 ist eine schematische Querschnittsansicht durch ein Formteil 5 aus Kunststoff für eine Airbag-Abdeckung, hier eine Lenkrad-Airbag-Abdeckung gezeigt. Das Formteil 5 entspricht den Airbag-Abdeckungen gemäß dem Stand der Technik. Sie weist auf der Unterseite Sollbruchstellen 2 in Form von Nuten auf. Auf der Oberseite, d.h. zum Innenraum eines Kraftfahrzeugs gerichtet, sind zusätzlich Ziernuten 3 eingeformt. Auf der Oberseite des Formteils 5 ist eine Lederbedeckung 4 aufkaschiert. Das heißt, die Lederbedeckung 4 ist auf dem Formteil 5 aufgeklebt. Die Lederbedeckung 4 ist der Innenausstattung des Fahrzeugs angepaßt und vermittelt ein gefälliges Äußeres. Auf der Unterseite, d.h. der dem Formteil 5 zugewandten Seite, ist die Lederbedeckung 4 im Bereich der Sollbruchstellen 2 des Formteils 5 in ihrer Dicke verringert. Somit sind über den Sollbruchstellen 2 des Formteils 5 partielle Materialdickenreduzierungen 1 in der Lederbedeckung 4 geschaffen. Bei dem hier beispielhaft gezeigten Pralltopf eines Lenkrads sind den Sollbruchstellen 2 gegenüberliegend die Ziernuten 3 im Formteil 5 eingeformt. In diese Ziernuten 3 wiederum sind die verdünnten Bereiche der Materialdickenreduzierungen 1 der Lederbedeckung 4 eingedrückt.

Die Sollbruchstellen 2 und die entsprechend darüberliegenden Materialdickenreduzierungen 1 der Lederbedeckung 4 sind entsprechend den Anforderungen zur Auslösung des Airbags linienförmig geschlossen. Dabei kann bei Auslösung des Airbags das Formteil 5 an den Sollbruchstellen 2 reißen und das Formteil 5 verschwenkt um hier lediglich angedeutete Drehachsen 11. Gleichzeitig reißt die Lederschichtung 4 an den Materialdickenreduzierungen 1 auf, um das einwandfreie Austreten des Airbags zu ermöglichen. Hierzu sind die Materialdickenreduzierungen 1 in der Lederbedeckung 4 auf eine derartige Dicke reduziert, daß eine zum Auslösen des Airbags erforderliche definierte Reißkraft die Lederbedeckung 4 aufreißt.

In den Fig. 2 bis 4 sind die zur Herstellung einer Sichtbedeckung 4 (hier Lederbeschichtung bzw. Lederbedeckung) notwendigen Mittel dargestellt. In der Fig. 3 ist eine Schablone 9 gezeigt, die zur Herstellung von Materialdickenreduzierungen in einer Lederbedeckung 4 Verwendung findet. Die Schablone 9 besteht hier beispielhaft aus einem flexiblen Kunststoffmaterial und weist an einer Seite Erhebungen 10 auf. Die Erhebungen 10 sind durch Fräsen einer Kunststoffplatte hergestellt. Die Erhebungen 10 bilden in der Draufsicht ein Linienmuster. Die hier gezeigte Schablone 9 dient zur Herstellung einer Sichtbedeckung für einen Pralltopf eines Lenkrads, das mit einem Airbag ausrüstbar ist.

Die Schablone 9 wird zusammen mit einem Lederstreifen der entsprechenden Größe in eine an sich bekannte Lederspaltmaschine engeführt.

Eine schematische Darstellung der Bearbeitung einer Sichtbedeckung, hier einer Lederbedeckung 4, ist in der Fig. 2 schematisch dargestellt. Bei der in Fig. 2 dargestellten Ansicht sind eine untere Transportwalze 7 und eine obere Transportwalze 6 gegenüberliegend angeordnet. Die untere Transportwalze 7 ist federnd gelagert. Am Ausgang der Transportwalzen 6, 7 ist ein Bandmesser 8 angeordnet, das in dieser Darstellung in die Zeichenebene hinein umläuft. Das Bandmesser 8 besteht hier aus einem umlaufenden Band mit einer vorderen Schneide.

Zwischen die zwei Transportwalzen 6, 7 wird eine Schablone 9 gemäß der in Fig. 3 dargestellten Ansicht mit einem darauf aufliegenden Lederstreifen 4 eingebracht. Durch die federnde Lagerung der Rolle 7 wird die Lederbedeckung 4 auf die Schablone 9 gepreßt. Dabei schneidet das Bandmesser 8 im Bereich der Erhebungen 10 der Schablone 9 die Lederbedeckung 4 auf einer Seite teilweise ab. Dadurch wird die Lederbedeckung 4 auf einer Seite gemäß der durch das Muster der Erhebungen 10 auf der Schablone 9 entsprechend mit einem Muster von verdünnten Abschnitten auf einer Seite der Lederbedeckung 4 versehen. Diese verdünnten Abschnitte weisen dann eine derartige Dicke auf, daß bei einer bestimmten Reißkraft die Lederbedeckung 4 an diesen Stellen reißt.

In der Fig. 4 ist eine schematische Querschnittsansicht durch eine Schablone 9 gemäß der Linie A-A in Fig. 3 gezeigt. Hier sind die Erhebungen 10 beispielhaft kegelstumpfförmig im Querschnitt ausgebildet. Sie können jedoch auch senkrechte Flanken aufweisen. Je nach zu verarbeitendem Material und der Dicke der Sichtbedeckung 4 sind die Höhen der Erhebungen 10 auszugestalten. Je höher die Erhebungen 10 sind, je mehr Material wird in der Spaltmaschine gemäß der Fig. 2 abgeschnitten. Dadurch lassen sich sehr genau definierte Materialverdünnungsbereiche in der Sichtbedeckung 4 erstellen. Die Bearbeitung kann bis zu einer Genauigkeit von fünf hundertstel Millimetern erfolgen.

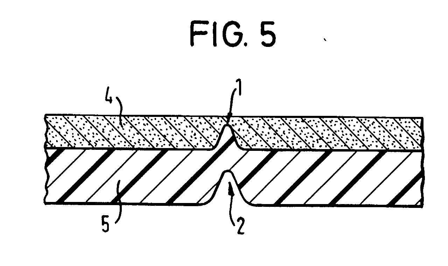

Ein zweites Ausführungsbeispiel einer erfindungsgemäßen Airbag-Abdeckung ist in der Fig. 5 gezeigt. Bei der in Fig. 5 dargestellten Teilquerschnittsansicht ist die Sichtbedeckung 4 in Form einer Lederbeschichtung wiederum, wie bereits zuvor beschrieben, mit einer partiellen Materialdickenreduzierung 1 ausgebildet. Bei der hier dargestellten Teilquerschnittsansicht ist nur ein Teilbereich der Sichtbedeckung 4 gezeigt. Die Sichtbedeckung 4 ist hier mit Kunststoff hinterspritzt. Der hinterspritzte Kunststoff bildet dabei das Formteil 5. In dem Formteil 5 sind wiederum Sollbruchstellen 2 eingeformt. Durch die Hinterspritzung der Sichtbedeckung 4 mit Kunststoff, füllt der Kunststoff auch die durch die partiellen Materialdickenreduzierungen 1 gebildeten Nuten in der Sichtbedeckung 4 aus.

Die partiellen Materialdickenreduzierungen 1 in der Sichtbedeckung 4 und die Sollbruchstellen 2 im Formteil 5 sind hier übereinander angeordnet.

Durch die Hinterspritzung der Sichtbedeckung 4, in der bereits partielle Materialdickenreduzierungen 1 eingeformt sind, wird erreicht, daß auf der Sichtseite der Sichtbedeckung 4 die partiellen Materialdickenreduzierungen 1 nicht sichtbar sind und eine glatte Oberfläche auf der Sichtseite der Sichtbedeckung 4 gebildet wird. Gegenüber dem zuvor beschriebenen Ausführungsbeispiel mit aufkaschierter Sichtbedeckung 4 sind die partiellen Materialdickenreduzierungen 1 in der Sichtbedeckung 4 auf der Sichtseite nicht mehr feststellbar. Demzufolge sind keine Ziernuten im Formteil 5 mehr notwendig.

## Patentansprüche

1. Airbag-Abdeckung, insbesondere für einen Airbag als Frontal- und Seitenaufprallschutz in einem Kraftfahrzeug, mit
- einem die Airbag-Betriebseinrichtungen sowie das Airbag-Aufprallpolster abdeckenden Formteil (5), das Sollbruchstellen (2) aufweist, die bei Auslösung des Airbags durch das Airbag-Aufprallpolster aufbrechbar sind und ein Austreten des Airbag-Aufprallpolsters gewährleisten, und
- einer das Formteil (5) überdeckenden Sichtbedeckung (4), die partielle Materialdickenreduzierungen (1) aufweist, die im Bereich der Sollbruchstellen (2) des Formteils (5) verlaufen,
**dadurch gekennzeichnet, daß**
die Materialdickenreduzierungen (1) durch Materialabtrag geschaffen sind.

2. Airbag-Abdeckung nach Anspruch 1, dadurch gekennzeichnet, daß die Sichtbedeckung (4) eine flexible Schicht ist.

3. Airbag-Abdeckung nach Anspruch 2, dadurch gekennzeichnet, daß die flexible Schicht aus Leder, einem Lederaustauschmittel, wie Kunstleder, Alcantara, Lorica, oder aus einer Kunststoffolie, wie PUR, PVC, ASA, ABS besteht.

4. Airbag-Abdeckung nach Anspruch 1, 2 oder 3, dadurch gekennzeichnet, daß die Sichtbedeckung die partiellen Materialdickenreduzierungen (1) auf der dem Formteil (5) zugewandten Seite aufweist.

5. Airbag-Abdeckung nach einem oder mehreren der vorhergehenden Ansprüche, dadurch gekennzeichnet, daß die partiellen Materialdickenreduzierungen (1) Nuten auf der Oberfläche der Sichtbedeckung (4) bilden.

6. Airbag-Abdeckung nach einem der vorhergehenden Ansprüche, dadurch gekennzeichnet, daß das Formteil (5) aus einem gespritzten Formteil besteht.

7. Airbag-Abdeckung nach einem der vorhergehenden Ansprüche, dadurch gekennzeichnet, daß das Formteil (5) aus einem oder mehreren Metallteilen besteht, die umschäumt sind.

8. Airbag-Abdeckung nach einem der vorhergehenden Ansprüche, dadurch gekennzeichnet, daß die Sichtbedeckung (4) hinterspritzt ist und hierdurch das Formteil (5) bildbar ist.

9. Airbag-Abdeckung nach einem der vorhergehenden Ansprüche, dadurch gekennzeichnet, daß die Sichtbedeckung (4) auf dem Formteil (5) aufkaschiert ist.

10. Airbag-Abdeckung nach einem der vorhergehenden Ansprüche, dadurch gekennzeichnet, daß die partiellen Materialdickenreduzierungen (1) im Querschnitt eine Breite aufweisen, die sich über die Sollbruchstelle (2) im Formteil (5) erstreckt.

11. Airbag-Abdeckung nach einem der vorhergehenden Ansprüche, dadurch gekennzeichnet, daß die Bereiche der partiellen Materialdickenreduzierungen (1) eine Dicke aufweisen, die zumindest ein 1/10 mm beträgt, insbesondere 2/10 mm oder mehr.

12. Verwendung einer Airbag-Abdeckung nach einem der vorhergehenden Ansprüche in einem Lenkrad-Airbag und/oder einem Beifahrer-Airbag und/oder einem Seitenaufprallschutz und/oder in einer in den Seitenholmen des Fahrzeugs oder in Sitzen des Fahrzeugs einbaubaren Airbag-Einrichtung.

13. Verfahren zur Herstellung einer Sichtbedeckung für eine Airbag-Abdeckung nach einem der Ansprüche 1 bis 11, dadurch gekennzeichnet, daß ein flexibles Schichtmaterial (4) auf eine mit Erhebungen (10) ausgestattete Schablone (9) aufgelegt wird und das Schichtmaterial (4) im Bereich der Erhebungen (10) auf der der Schablone abgewandten Seite teilweise mittels einer Schneideinrichtung (8) definiert abgetragen wird.

14. Verfahren nach Anspruch 13, dadurch gekennzeichnet, daß die Schablone (9) mit dem flexiblen Schichtmaterial (4) in einer an sich bekannten Spaltmaschine für Leder oder lederähnlichen Werkstoffen mittels einem Bandmesser (8) bearbeitet wird.

15. Schablone zur Verwendung in einem Verfahren nach den Ansprüchen 13 oder 14, dadurch gekennzeichnet, daß die Schablone (9) aus einem plattenförmigen Material besteht, deren Erhebungen (10) durch Abtragen von Material auf einer Seite der Platte oder im Spritzgußverfahren herstellbar sind.

16. Schablone nach Anspruch 15, dadurch gekennzeichnet, daß die Schablone (9) aus flexiblem Kunststoffmaterial besteht.

17. Schablone nach Anspruch 15 oder 16, dadurch gekennzeichnet, daß die Erhebungen (10) in der Draufsicht Linien bilden, die mit Sollbruchstellen (2) in einem Formteil (5) übereinstimmen.

18. Schablone nach einem der Ansprüche 15, 16 oder 17, dadurch gekennzeichnet, daß die Erhebung (10) im Querschnitt senkrechte Flanken oder geneigte Flanken aufweisen.

## Claims

1. Airbag cover, in particular for an airbag as protection against head-on and side-on collision in a motor vehicle, with
- a moulding (5) which covers the airbag operating means as well as the airbag collision cushion and which comprises predetermined break points (2) which on release of the airbag can be broken open by the airbag collision cushion and ensure exit of the airbag collision cushion, and
- a visible covering (4) which covers the moulding (5) and which comprises partial reductions in material thickness (1) extending in the region of the predetermined break points (2) of the moulding (5),
characterised in that the reductions in material thickness (1) are created by removal of material.

2. Airbag cover according to claim 1, characterised in that the visible covering (4) is a flexible layer.

3. Airbag cover according to claim 2, characterised in that the flexible layer is made of leather, a leather substitute such as synthetic leather, Alcantara, Lorica, or a plastic film such as PU, PVC, ASA, ABS.

4. Airbag cover according to claim 1, 2 or 3, characterised in that the visible covering comprises the partial reductions in material thickness (1) on the side facing towards the moulding (5).

5. Airbag cover according to one or more of the preceding claims, characterised in that the partial reductions in material thickness (1) form grooves on the surface of the visible covering (4) .

6. Airbag cover according to any of the preceding claims, characterised in that the moulding (5) consists of an injection moulding.

7. Airbag cover according to any of the preceding claims, characterised in that the moulding (5) consists of one or more metal parts surrounded by foam.

8. Airbag cover according to any of the preceding claims, characterised in that injection moulding is carried out behind the visible covering (4) and hence the moulding (5) can be formed.

9. Airbag cover according to any of the preceding claims, characterised in that the visible covering (4) is laminated on to the moulding (5).

10. Airbag cover according to any of the preceding claims, characterised in that the partial reductions in material thickness (1) in cross-section have a width extending over the predetermined break point (2) in the moulding (5).

11. Airbag cover according to any of the preceding claims, characterised in that the regions of the partial reductions in material thickness (1) have a thickness which is at least 1/10 mm, in particular 2/10 mm or more.

12. Use of an airbag cover according to any of the preceding claims in a steering wheel airbag and/or a front-seat passenger airbag and/or a side-on collision protection and/or in an airbag device which can be fitted in the side pillars of the vehicle or in seats of the vehicle.

13. Method for the manufacture of a visible covering for an airbag cover according to any of claims 1 to 11, characterised in that a flexible layer material (4) is laid on a template (9) provided with projections (10) and the layer material (4) in the region of the projections (10) on the side facing away from the template is partially removed by means of a cutting device (8) in a predefined manner.

14. Method according to claim 13, characterised in that the template (9) with the flexible layer material (4) is worked with a belt knife (8) in a splitting machine known in the art for leather or leather-like materials.

15. Template for use in a method according to claim 13 or 14, characterised in that the template (9) is made of a laminar material whose projections (10) can be made by removing material on one side of the lamina or by injection moulding.

16. Template according to claim 15, characterised in that the template (9) is made of flexible plastic material.

17. Template according to claim 15 or 16, characterised in that the projections (10) in plan view form lines which match predetermined break points (2) in a moulding (5).

18. Template according to any of claims 15, 16 or 17, characterised in that the projections (10) in cross-section have vertical flanks or sloping flanks.

## Revendications

1. Cache pour coussin gonflable, en particulier pour un coussin gonflable faisant office de protection contre les chocs frontaux et latéraux, dans un véhicule automobile, avec
- une partie façonnée (5), recouvrant les dispositifs fonctionnels du coussin gonflable ainsi que le rembourrage d'impact du coussin gonflable, présentant des points destinés à la rupture (2) qui, lors du déclenchement du coussin gonflable, sont susceptibles d'être rompus par le rembourrage d'impact du coussin gonflable et assurent une sortie du rembourrage d'impact du coussin gonflable, et
- un pièce de masquage (4) recouvrant la partie façonnée (5), présentant des réductions partielles (1) de l'épaisseur du matériau, s'étendant dans la zone des points destinés à la rupture (2) de la pièce façonnée (5),
caractérisé en ce que les réductions d'épaisseur de matériau (1) sont créées par enlèvement de matière.

2. Cache pour coussin gonflable selon la revendication 1, caractérisé en ce que le pièce de masquage (4) est une couche flexible.

3. Cache pour coussin gonflable selon la revendication 2, caractérisé en ce que la couche flexible est constituée de cuir, d'un substitut du cuir, tel que du cuir artificiel, de l'alcantara, du lorica, ou bien d'une feuille de matière synthétique, tel que du PUR, PVC, ASA, ABS.

4. Cache pour coussin gonflable, selon la revendication 1, 2 ou 3, caractérisé en ce que le pièce de masquage présente les réductions partielles d'épaisseur de matériau (1) sur la face tournée vers la pièce façonnée (5).

5. Cache pour coussin gonflable selon l'une ou plusieurs des revendications précédentes, caractérisé en ce que les réductions partielles d'épaisseur de matériau (1) constituent des gorges sur la surface du pièce de masquage (4).

6. Cache pour coussin gonflable selon l'une des revendications précédentes, caractérisé en ce que la pièce façonnée (5) est constituée d'une pièce façonnée moulée par injection.

7. Cache pour coussin gonflable selon l'une des revendications précédentes, caractérisé en ce que la pièce façonnée (5) est constituée d'une ou plusieurs parties métalliques, surenrobées par une substance alvéolaire.

8. Cache pour coussin gonflable selon l'une des revendications précédentes, caractérisé en ce que le pièce de masquage (4) est moulé par injection par l'arrière et la pièce façonnée (1) étant susceptible d'être constituée de ce fait.

9. Cache pour coussin gonflable selon l'une des revendications précédentes, caractérisé en ce que le pièce de masquage (4) est appliqué par scellage sur la pièce façonnée (5).

10. Cache pour coussin gonflable selon l'une des revendications précédentes, caractérisé en ce que les réductions partielles d'épaisseur de matériau (1) présentent, observée en coupe, une largeur s'étendant au-dessus du point destiné à la rupture (2) ménagée dans la pièce façonnée (5).

11. Cache pour coussin gonflable selon l'une des revendications précédentes, caractérisé en ce que les zones des réductions partielles d'épaisseur de matériau (1) présentent une épaisseur d'au moins 1/10 mm, en particulier de 2/10 mm ou plus.

12. Utilisation d'un cache pour coussin gonflable selon l'une des revendications précédentes, dans un coussin gonflable monté sur volant et/ou un coussin gonflable pour passager et/ou une protection d'impact latérale, et/ou un dispositif à coussin gonflable intégrable dans les montants latéraux du véhicule ou dans les sièges du véhicule.

13. Procédé de fabrication d'un pièce de masquage pour un cache à coussin gonflable selon l'une des revendications 1 à 11, caractérisé en ce qu'un matériau en couche (4) flexible est posé sur un gabarit (9) doté de bossages (11), et le matériau en couche (4) étant partiellement enlevé, de façon définie, dans la zone des bossages (10), sur la face postérieure au gabarit, au moyen d'un dispositif de découpage (8).

14. Procédé selon la revendication 13, caractérisé en ce que le gabarit (9) avec le matériau en couche (4) flexible est usiné dans une machine à refendre, connue en soi, conçue pour le cuir ou des substances analogues au cuir, au moyen d'une lame ruban (9).

15. Gabarit pour utilisation dans un procédé selon les revendications 13 ou 14, caractérisé en ce que le gabarit (9) est constitué d'un matériau en forme de plaque, dont les bossages (10) peuvent être constitués par enlèvement de matière sur une face de la plaque ou dans un procédé de moulage par injection.

16. Gabarit selon la revendication 15, caractérisé en ce que le gabarit (9) est constitué d'un matériau synthétique flexible.

17. Gabarit selon la revendication 15 ou 16, caractérisé en ce que les bossages (10) constituent, en vue de dessus, des lignes coïncidant avec des points destinés à la rupture (2) réalisés dans une pièce façonnée (5).

18. Gabarit selon l'une des revendications 15, 16, ou 17, caractérisé en ce que les bossages (10) présentent des flancs perpendiculaires ou des flancs inclinés, lorsqu'on les observe en coupe transversale.
